# EUROPÄISCHE PATENTSCHRIFT

(11) **EP 2 786 815 B1**
(45) Veröffentlichungstag und Bekanntmachung des Hinweises auf die Patenterteilung: **25.03.2015**
(21) Anmeldenummer: 14163019.4
(22) Anmeldetag: 01.04.2014
(51) Int. Cl.: B21D 28/24, B21D 28/28, B21D 53/88, B60R 19/00

(54) **Verfahren und Vorrichtung zur Herstellung eines Energieabsorptionsprofils für ein Kraftfahrzeug**
Method and device for producing an energy absorption profile for a motor vehicle
Procédé et dispositif de fabrication d'un profil d'absorption d'énergie pour un véhicule automobile

(30) Priorität: 04.04.2013 DE 102013103366
(43) Veröffentlichungstag der Anmeldung: 08.10.2014
(73) Patentinhaber: Benteler Automobiltechnik GmbH, 33102 Paderborn (DE)
(72) Erfinder: Hansen, Kathy, 6270 Tønder (NO); Clausen, Edwin List, 6200 Løjt Kirkeby Åbenrå (NO); Holm, Børge, 6261 Bredebro (DK); Roe, Sigmund, 2891 Gjøvik (NO)
(74) Vertreter: Griepenstroh, Jörg

(56) Entgegenhaltungen:
- EP-A1- 0 672 479
- GR-B- 1 003 476
- IL-A- 109 042
- US-A- 5 896 773

## Beschreibung

Die Erfindung betrifft ein Verfahren und eine Vorrichtung zur Herstellung eines Energieabsorptionsprofils für ein Kraftfahrzeug. Ein solches Energieabsorptionsprofil umfasst ein stranggepresstes Hohlprofil mit Außenwänden sowie wenigstens eine zwei Außenwände verbindende Innenwand. Das Energieabsorptionsprofil baut bei einem Unfall Bewegungsenergie durch Deformation innerhalb des Profils ab.

Als Deformationszonen ausgebildete Teile von Fahrzeugstrukturen dienen dem passiven Schutz der Insassen sowie zum Schutz der Tragstruktur des Kraftfahrzeugs. Ziel ist es, die aus einem Anprall resultierende Energie aufzunehmen und in dem Energieabsorptionsprofil in Verformungsarbeit umzuwandeln. Hierdurch sollen die auf Insassen oder einem verunfallten Fußgänger einwirkenden Kräfte reduziert und auch das Überschreiten von kritischen Lastniveaus, bei welchen tragende Fahrzeugstrukturen des Kraftfahrzeugs bleibend beschädigt werden können, vermieden werden.

Energieabsorptionsprofile können beispielsweise als Crashboxen ausgebildet sein, welche in Kombination mit dem Stoßfängerquerträger die Kollisionskräfte bei einem Aufprall mit geringer Geschwindigkeit absorbieren, ohne dass der Rest der Karosseriestruktur beschädigt wird. Eine Crashbox gebildet aus ineinander verschachtelten Strangpressprofilen zählt durch die DE 10 2011 107 698 A1 zum Stand der Technik.

Eine Crashbox für Kraftfahrzeuge zur Energieaufnahme bei einer Kollision des Kraftfahrzeugs mit einem Hindernis ist auch in der US 2002 / 0 158 384 A1 beschrieben. Die Crashbox weist einen aus Metall bestehenden, eine Längsrichtung des Aufpralldämpfers definierenden zylindrischen Hohlkörper mit Verformungssicken im Mantel auf. Die Verformungssicken dienen zur Realisierung einer definierten Stauchung des Hohlkörpers bei Kraftbeaufschlagung in Längsrichtung.

Aus der DE 102 34 253 B3 geht ein Verfahren zur Herstellung einer Crashbox für Kraftfahrzeuge aus einem Blechhalbzeug sowie eine Crashbox für Kraftfahrzeuge mit einem Mehrfachkammerprofil hervor. Zur Herstellung der Crashbox wird das Halbblechzeug durch Biegen oder Falten in ein Mehrfachkammerprofil, insbesondere ein Doppelkammerprofil, umgeformt.

Auch Querträger- oder Längsträgerbauteile können als Energieabsorptionsprofil ausgelegt sein. Dies gilt insbesondere für Querträger- und Längsträgerbauteile, die bei einem Anprall axial belastet werden.

Sowohl unter fertigungstechnischen Aspekten als auch wegen des Energieabsorptionsvermögens und aus Gründen der Gewichtsreduzierung kommen Energieabsorptionsprofile aus stranggepressten Hohlprofilen aus Leichtmetallwerkstoffen zum Einsatz. In diesem Zusammenhang gehört durch die DE 10 2008 029 634 A1 ein Stoßfänger zum Stand der Technik mit an diesem angebrachten Energieabsorptionsprofilen in Form von Deformationselementen. Die Deformationselemente sind rechteckige Hohlprofile mit einer oder mehreren Kammern. Ein Mehrkammerprofil wird durch Innenwände gebildet, die zwischen zwei Außenwänden angeordnet sind und diese verbinden.

Der in der DE 196 03 953 C1 beschriebene Aufpralldämpfer für Kraftfahrzeuge weist ein erstes Strangpress-Hohlprofilteil auf, dessen Profil sich quer zur Längsachse des Aufpralldämpfers erstreckt. Zur Erhöhung der Knicksteifigkeit des Aufpralldämpfers ist der erste Strangpress-Hohlprofilteil formschlüssig von einem hülsenförmigen zweiten Hohlprofilteil umgeben, wobei sich dessen offene Enden einerseits an einem Flanschteil des Aufpralldämpfers und andererseits am Querträger des Kraftfahrzeugs abstützen.

Zu den Vorteilen von Strangpressprofilen zählt die Möglichkeit, auch kompliziertere Formen von Hohlprofilen herzustellen. Allerdings ist die Querschnittsgeometrie sowie die äußere und innere Form des Pressstrangs durch das Presswerkzeug bestimmt und fertigungstechnisch über die gesamte Länge des Hohlprofils gleich.

Bei Energieabsorptionsprofilen für Kraftfahrzeuge aus stranggepressten Hohlprofilen dienen die Innenwände zwischen zwei Außenwänden insbesondere dazu, dem Profil Stabilität zu geben sowie zum Energieabbau beizutragen. Unter diesem Aspekt ist eine bauteilspezifische Auslegung des Verformungsverhaltens des Energieabsorptionsprofils wünschenswert, um das Umformverhalten und damit das Energieabsorptionsvermögen zu beeinflussen.

Der Erfindung liegt daher, ausgehend vom Stand der Technik, die Aufgabe zugrunde, ein Verfahren und eine Vorrichtung zur Herstellung eines im Verformungsverhalten verbesserten Energieabsorptionsprofils für ein Kraftfahrzeug zu schaffen.

Der verfahrensgemäße Teil der Aufgabe wird durch Anspruch 1 gelöst.

Eine Vorrichtung zur Durchführung des erfindungsgemäßen Verfahrens ist Gegenstand von Anspruch 6.

Eine Vorrichtung zur Herstellung eines Energieabsorptionsprofils zeigt Anspruch 7 auf. Das Dokument EP0672479 zeigt ein Verfahren und eine Vorrichtung zum Stanzen eines stranggepressten Hohlprofils.

Bei einem erfindungsgemäß hergestellten Energieabsorptionsprofil für ein Kraftfahrzeug kann es sich insbesondere um eine Crashbox, einen Querträger oder einen Längsträger bzw. Querträger- oder Längsträgerbauteile handeln. Insbesondere sind es Profile, die in einem Crashfall in axialer Richtung belastet werden und Anprallenergie in Verformungsarbeit durch Deformation oder Faltenwurf umwandeln. Das Absorptionsprofil umfasst ein stranggepresstes Hohlprofil mit Außenwänden sowie wenigstens eine Innenwand, welche sich zwischen zwei Außenwände erstreckt und diese verbindet. Die Innenwand ist zur Einstellung des Verformungsverhaltens und des Energieabsorptionsvermögens lokal entfernt. Hierzu ist ein innenliegender Wandabschnitt bereichsweise aus der Innenwand getrennt. Die Innenwand erstreckt sich in Längsrichtung über die Länge des stranggepressten Hohlprofils und weist im Inneren zumindest einen ausgenommenen Bereich auf, in welchem der Wandabschnitt entfernt ist. Der entfernte Bereich bzw. Abschnitt der Innenwand liegt zwischen zwei verbleibenden Wandabschnitten. Der bzw. die entfernten Wandabschnitte bilden Ausnehmungen in der Innenwand.

In den jeweiligen Endabschnitten des Hohlprofils erstreckt sich die Innenwand jeweils bis zu den Stirnseiten des Hohlprofils.

Die entfernten Wandabschnitte können vorzugsweise vollständig zwischen den Außenwänden entfernt sein. Dieser Aspekt sieht vor, dass die Innenwand bündig entlang der Innenfläche der Außenwände herausgetrennt ist. Möglich ist es auch, dass die Innenwand unter Verbleib von seitlichen Stegen an den Außenwänden bereichsweise entfernt ist.

Ein Aspekt der Erfindung sieht vor, dass 20 % bis 80 % der Innenwand entfernt sind. Hierbei können gezielt mehrere innenliegende Wandabschnitte entfernt sein. Innerhalb einer Innenwand gibt es folglich eine Abfolge von ausgenommenen Bereichen.

Bei einem Mehrkammerprofil mit zwei oder mehr Innenwänden, bei welchem folglich wenigstens zwei mit Abstand zueinander angeordnete Innenwände vorgesehen sind, können in beiden Innenwänden entfernte Wandabschnitte vorgesehen sein. Die Wandabschnitte bzw. die entfernten Bereiche können korrespondierend zueinander liegen. Damit ist gemeint, dass die entfernten Wandabschnitte bzw. die hierdurch gebildeten Ausnehmungen in den Innenwänden übereinander bzw. nebeneinander und sich deckend angeordnet sind. Weiterhin ist es möglich, dass die entfernten Wandabschnitte und die hierdurch ausgenommenen Bereiche versetzt zueinander liegen.

Das Hohlprofil des Energieabsorptionsprofils ist stranggepresst und besteht aus Leichtmetall bzw. einer Leichtmetalllegierung, insbesondere einer Aluminiumlegierung. Besonders bevorzugt sind die Wandabschnitte schneidtechnisch aus der Innenwand getrennt.

Ein Verfahren zur Herstellung eines Energieabsorptionsprofils für ein Kraftfahrzeug sieht folgende Schritte vor:
- Bereitstellen eines stranggepressten Hohlprofils, welches Außenwände und zumindest eine zwei Außenwände verbindende Innenwand aufweist;
- Einführen eines Schneidwerkzeugs in das Hohlprofil;
- Betätigung des Schneidwerkzeugs und Trennen eines innenliegenden Wandabschnitts aus der Innenwand;
- Entfernen des ausgeschnittenen Wandabschnitts und des Schneidwerkzeugs aus dem Hohlprofil.

Das Schneidwerkzeug allgemein, insbesondere die aktiven Schneid- bzw. Trennkomponenten, wie die Schneiden des Schneidwerkzeugs, wird bzw. werden durch Antriebsmittel betätigt. Hierbei kann es sich um elektrische, mechanische, hydraulische, pneumatische Antriebsmittel oder um Mischformen der vorgenannten Antriebsmittel handeln.

Der Trennvorgang kann durch eine Bewegung des Schneidwerkzeugs bzw. von Schneidwerkzeugteilen bewirkt werden. Auch können Schneid- oder Trennkomponenten des Schneidwerkzeugs bewegt werden. Die Bewegung des Schneidwerkzeugs bzw. der Schneidwerkzeugteile kann durch eine Presse mit einem Linearantrieb oder einem Exzenterantrieb erfolgen. Die Trennbewegung von Schneid- bzw. Trennkomponenten des Schneidwerkzeugs kann mechanisch, beispielsweise durch Umsetzung einer Linearbewegung in eine Radialbewegung der Schneid- bzw. Trennkomponenten über eine schiefe Ebene ausgeführt werden. Auch können das Schneidwerkzeug bzw. Schneidwerkzeugteile hydraulisch oder pneumatisch mittels hydraulischer oder pneumatischer Antriebe, -zylinder oder -expansionskörpern bewegt werden, um den Trennvorgang zu vollziehen. Beim Trennen werden benachbarte Bereiche des zu entfernenden Wandabschnitts der Innenwand abgestützt.

Da die Hohlprofile im Vergleich zu ihrer Höhe und Breite eine größere Länge besitzen, kommen entsprechend lange und auf den Querschnitt in einem Mehrkammerprofil bzw. der einzelnen Kammern eines Mehrkammerprofils abgestimmte dünne Schneidwerkzeugteile zum Einsatz.

Ein Schneidwerkzeug besitzt ein erstes Schneidwerkzeugteil und ein zweites Schneidwerkzeugteil. Das erste Schneidwerkzeug und das zweite Schneidwerkzeug werden von einer Stirnseite des Hohlprofils in dieses eingeführt. Hierbei können die Schneidwerkzeuge von der gleichen Stirnseite gleichläufig oder von gegenüberliegenden Stirnseiten des Hohlprofils gegenläufig in dieses eingeführt werden. Das erste Schneidwerkzeugteil wird in eine erste Kammer des Hohlprofils auf einer ersten Seite der Innenwand eingeführt, wohingegen das zweite Schneidwerkzeug in eine zweite Kammer des Hohlprofils auf der der ersten Seite gegenüberliegenden zweiten Seite der Innenwand eingeführt wird. Die Schneidwerkzeuge werden in Position gebracht und ein innenliegender Wandabschnitt positionsgenau herausgetrennt.

Es können mehrere Wandabschnitte gleichzeitig bei einem Trennvorgang aus der Innenwand herausgetrennt werden. Möglich ist es auch, das Schneidwerkzeug in Längsrichtung des Hohlprofils zu versetzen, um nacheinander unterschiedliche Wandabschnitte aus der Innenwand zu trennen.

Das Schneidwerkzeug kann durch außerhalb des Hohlprofils wirkende Antriebsmittel betätigt werden. Möglich ist es auch, dass das Schneidwerkzeug durch innerhalb des Hohlprofils wirkende Antriebsmittel betätigt wird. Auch Mischformen von äußeren und inneren Antriebsmitteln sind möglich.

Die Vorrichtung zur Herstellung eines Energieabsorptionsprofils umfasst ein Schneidwerkzeug, welches sich über die Länge des Hohlprofils erstreckt und

Schneiden aufweist. Mit Schneiden sind die beim Trennvorgang wirksamen Schneid- bzw. Trennkomponenten einschließlich von notwendigen Gegenhaltern oder auch Patrizen und Matrizen gemeint. Ferner besitzt das Schneidwerkzeug Stützzonen. Durch die Schneiden werden innenliegende Wandabschnitte des Hohlprofils herausgetrennt. Die Stützzonen dienen zur Abstützung benachbarter Bereiche des Wandabschnitts bzw. der Innenwand beim Trennvorgang. Das Schneidwerkzeug weist Schneiden auf, welche so angeordnet sind, dass zumindest ein innenliegender Wandabschnitt der Innenwand des Hohlprofils durch Betätigung des Schneidwerkzeugs herausgetrennt wird.

Wie vorstehend ausgeführt, kann das Schneidwerkzeug der Vorrichtung zur Herstellung des Energieabsorptionsprofils durch Antriebsmittel betätigt werden, welche außerhalb und/oder innerhalb des Hohlprofils auf das Schneidwerkzeug oder an dem Schneidwerkzeug wirken.

Ein Schneidwerkzeug umfasst zwei Schneidwerkzeugteile, die sich über die Länge des Hohlprofils erstrecken. Hierbei können die Schneidwerkzeugteile gleichläufig, also von einer Stirnseite in eine Richtung geführt in das Hohlprofil eingeführt werden, als auch gegenläufig in entgegengesetzte Richtung von jeweils gegenüberliegenden Stirnseiten her.

Eine vorteilhafte Ausgestaltung einer erfindungsgemäßen Vorrichtung sieht eine äußere Stützeinheit vor, welche das Hohlprofil beim Schneid- bzw. Trennvorgang aufnimmt. Hierdurch können die Schneidkräfte aufgenommen bzw. abgeleitet werden. Eine äußere Verformung des Hohlprofils wird durch die Stützeinheit verhindert. Dies ist insbesondere bei dünnwandigen Hohlprofilen vorteilhaft.

Die Erfindung ist nachfolgend anhand von Zeichnungen beschrieben. Es zeigen:
- Figur 1: ein Energieabsorptionsprofil in einer perspektivischen Darstellungsweise;
- Figur 2: das Energieabsorptionsprofil gemäß Figur 1 mit einem Einblick in den Innenraum;
- Figur 3: schematisiert das Ausgangsprofil eines Energieabsorptionsprofils in einer Seitenansicht;
- Figur 4: das Hohlprofil eines Energieabsorptionsprofils mit der Darstellung eines ersten Schneidwerkzeugs;
- Figur 5: das Hohlprofil eines Energieabsorptionsprofils mit der Darstellung einer zweiten Ausführungsform eines Schneidwerkzeugs.
- Figur 6: das Hohlprofil eines Energieabsorptionsprofils mit der Darstellung einer weiteren Ausführungsform eines Schneidwerkzeugs;
- Figur 7: das Hohlprofil eines Energieabsorptionsprofils mit der Darstellung einer weiteren Ausführungsform eines Schneidwerkzeugs;
- Figur 8: das Hohlprofil eines Energieabsorptionsprofils mit der Darstellung einer weiteren Ausführungsform eines Schneidwerkzeugs;
- Figur 9: das Hohlprofil eines Energieabsorptionsprofils mit der Darstellung einer weiteren Ausführungsform eines Schneidwerkzeugs;
- Figur 10: eine Stirnansicht auf ein Hohlprofil eines Energieabsorptionsprofils mit der Darstellung eines Schneidwerkzeugs in vertikaler Schnittdarstellung und
- Figur 11: eine Stirnansicht auf das Hohlprofil eines Energieabsorptionsprofils und eine Ausführungsform einer Vorrichtung zur Herstellung des Energieabsorptionsprofils.

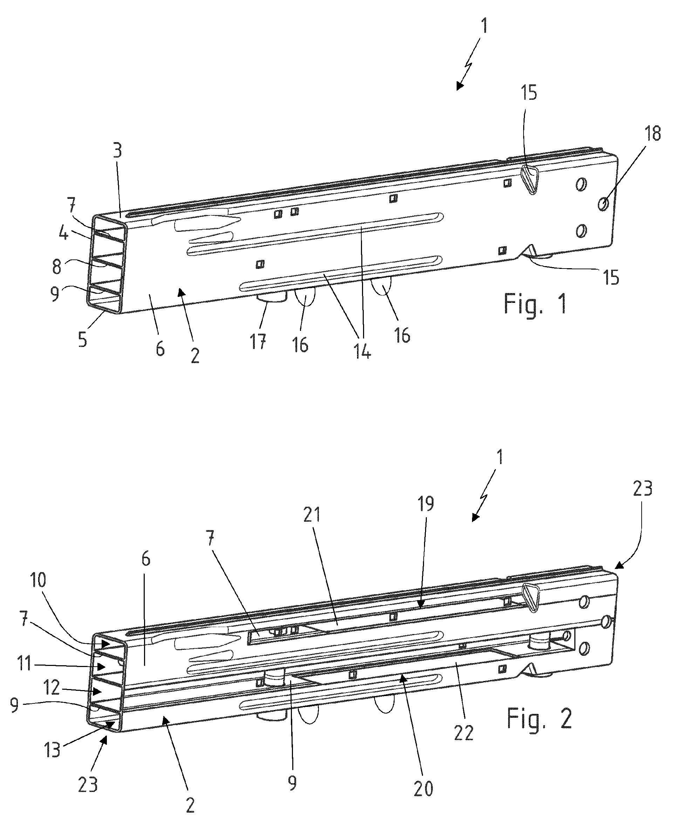

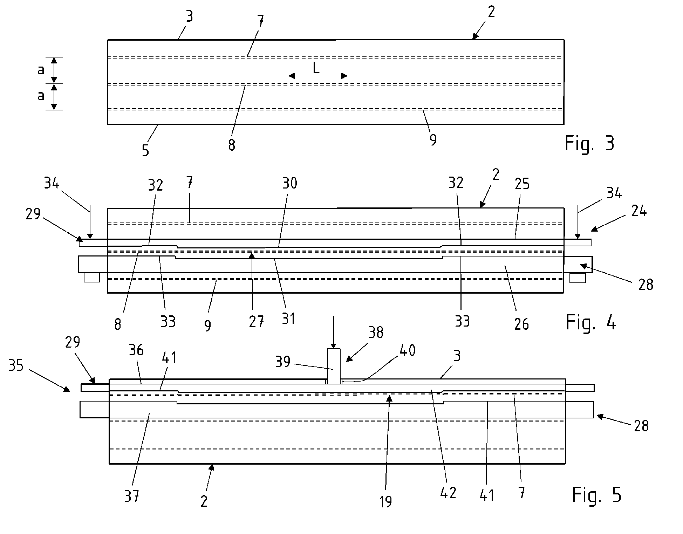

Die Figuren 1 und 2 zeigen ein gemäß der Erfindung hergestelltes Energieabsorptionsprofil 1. Das Energieabsorptionsprofil 1 weist ein stranggepresstes Hohlprofil 2 aus Leichtmetall bzw. einer Leichtmetalllegierung auf. Das Hohlprofil 2 besitzt einen rechteckigen und umfangsseitig geschlossenen Querschnitt mit vier Außenwänden 3, 4, 5, 6. Zwischen den beiden seitlichen Außenwänden 4, 6 erstrecken sich im hier dargestellten Ausführungsbeispiel drei Innenwände 7, 8, 9. Die Innenwände 7, 8, 9 verbinden die seitlichen Außenwände 4, 6 und teilen das Hohlprofil 2 in insgesamt vier Kammern 10, 11, 12, 13 (siehe auch Figur 3) auf. Die Innenwände 7, 8, 9 verlaufen in Längsrichtung L des Hohlprofils 2. Die Innenwände 7, 8, 9 sind mit einem Abstand a übereinander angeordnet. Der Abstand a zwischen den Innenwänden 7, 8, 9 kann auch variieren. In den Außenwänden 3, 4, 5, 6 sind Längssicken 14 und Quersicken 15 vorgesehen. Weiterhin befinden sich Halter 16, Montageelemente 17 und Montageöffnungen 18 im Hohlprofil des Energieabsorptionsprofils 1.

Die Figur 2 gibt einen Einblick in den Innenraum des Hohlprofils 2. Hierzu ist die seitliche Außenwand 6 bereichsweise geöffnet dargestellt. Man erkennt, dass die Innenwände 7 und 9 in einem innenliegenden Wandabschnitt 19, 20 entfernt sind. Hierdurch werden Ausnehmungen 21, 22 in den Innenwänden 7, 9 gebildet. Die ausgenommenen bzw. entfernten Wandabschnitte 19, 20 liegen im mittleren Längenbereich des Hohlprofils 2. Jeweils rechts und links der entfernten Wandabschnitte 19, 20 erstrecken sich die Innenwände 7, 9 bis zu den in Bildebene linken und rechten Stirnseiten 23 des Hohlprofils 2 hin.

Bei dem hier dargestellten Ausführungsbeispiel liegen der entfernte Wandabschnitt 19 in der Innenwand 7 bzw. die Ausnehmung 21 und der entfernte Wandabschnitt 20 in der Innenwand 9 bzw. die Ausnehmung 22 deckend übereinander und korrespondieren zueinander.

Die durch die entfernten Wandabschnitte 19, 20 gebildeten Ausnehmungen 21, 22 in den Innenwänden 7, 8, 9 können auch versetzt zueinander angeordnet sein. Auch können die Ausnehmungen 21, 22 in den Innenwänden 7, 8, 9 in der Größe und der geometrischen Konfiguration voneinander variieren.

Durch die Entfernung der innenliegenden Wandabschnitte 19, 20 in den Innenwänden 7, 9 kann das Steifigkeitsverhalten und insbesondere das Verformungsverhalten und damit das Energieabsorptionsvermögen des Energieabsorptionsprofils 1 eingestellt werden. Insbesondere kann durch die geeignete Wahl der entfernten Wandabschnitte 19, 20 und deren Geometrie das Verformungsverhalten und die Faltenwurfcharakteristik bei Belastung und Überschreiten eines bestimmten Lastniveaus beeinflusst werden. In diesem Zusammenhang können die entfernten Wandabschnitte 19, 20 bündig zur Innenfläche der Außenwände 4, 6 herausgetrennt sein. Auch können Stege entlang der Außenwände 4, 6 verbleiben, um das Verformungsverhalten zu bestimmen.

Anhand der Figuren 3 bis 9 sind unterschiedliche Ausführungsformen von Schneidwerkzeugen einer Vorrichtung zur Herstellung eines erfindungsgemäßen Energieabsorptionsprofils 1 jeweils in einer schematisierten Seitenansicht dargestellt. Der Übersicht halber ist in den Figuren 3 bis 9 das Schneidwerkzeug in geöffneter Stellung gezeigt.

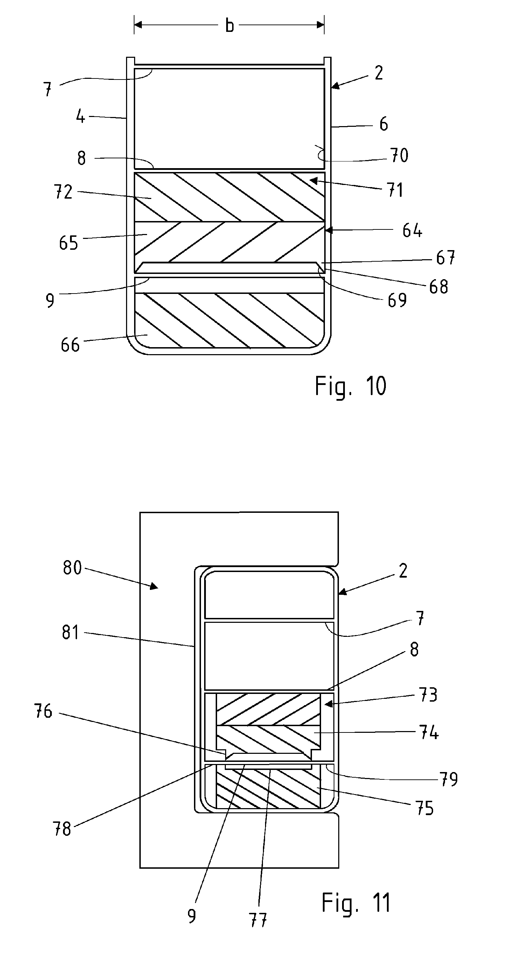

Die Figuren 10 und 11 zeigen Stirnansichten auf ein Hohlprofil 2 eines Energieabsorptionsprofils 1 mit der Darstellung unterschiedlicher Schneidwerkzeuge.

Figur 3 zeigt schematisch in einer Seitenansicht ein stranggepresstes Hohlprofil 2 entsprechend der Ausgestaltung gemäß den Figuren 1 und 2, bevor innere Wandabschnitte entfernt worden sind. Das in der Figur 3 dargestellte Hohlprofil 2 dient als Ausgangsprofil für die Herstellung des erfindungsgemäßen Energieabsorptionsprofils 1 und wird abgelängt aus einem Leichtmetall-Profilstrang auf Länge geschnitten bereitgestellt. Anschließend wird ein Schneidwerkzeug 24 bzw. Schneidwerkzeugteile 25, 26 in das Hohlprofil 2 eingeführt und durch Betätigung des Schneidwerkzeugs 24 ein innenliegender Wandabschnitt 19, 20 bzw. 27 aus einer oder mehrerer der Innenwände 7, 8, 9 herausgetrennt. Im Anschluss daran wird der ausgeschnittene Wandabschnitt 19, 20 bzw. 27 und das Schneidwerkzeug 24 aus dem Hohlprofil 2 entfernt.

Das schneidtechnische Entfernen bzw. Heraustrennen der Wandabschnitte 19, 20, 27 kann mit einer Reihe von Vorrichtungen mit unterschiedlichen Schneidwerkzeugen durchgeführt werden.

Bei der Vorrichtung wie in der Figur 4 dargestellt kommt ein Schneidwerkzeug 24 zur Anwendung, welches zwei Schneidwerkzeugteile 25, 26 umfasst, die sich über die Länge des Hohlprofils 2 erstrecken, so dass seitliche Enden 28, 29 der Schneidwerkzeugteile 25, 26 gegenüber dem Hohlprofil 2 vorstehen. Das obere, erste Schneidwerkzeug 25 wirkt als Schneidstempel und weist eine Schneide 30 auf. Das untere, zweite Schneidwerkzeugteil 26 besitzt eine zur Schneide 30 komplementäre Matrize 31 und fungiert gleichzeitig als Gegenhalter. Jeweils seitlich von der Schneide 30 und der Matrize 31 sind an den Schneidwerkzeugteilen 25, 26 Stützzonen 32, 33 vorgesehen, welche beim Trennvorgang mit der Innenwand 7, 8, 9 in Kontakt gelangen und die Innenwand 7, 8, 9 (in dem hier dargestellten Ausführungsbeispiel die Innenwand 8) beim Trennvorgang abstützen. Das Schneidwerkzeug 24 wird durch außerhalb des Hohlprofils 2 an den Schneidwerkzeugteilen 25, 26 wirkende Antriebsmittel 34 betätigt. Die Antriebsmittel 34 sind durch die Pfeile verdeutlicht. Durch Betätigung des Schneidwerkzeugs 24 wird ein innenliegender Wandabschnitt 27 der Innenwand 8 des Hohlprofils 2 herausgetrennt.

Die Vorrichtung, wie in der Figur 5 dargestellt, umfasst ein Schneidwerkzeug 35 mit einem oberen, ersten Schneidwerkzeugteil 36 und einem unteren, zweiten Schneidwerkzeugteil 37, die zusammenwirken, um einen innenliegenden Wandabschnitt 19 der oberen Innenwand 7 zu entfernen. Das Schneidwerkzeug 35 wird durch innerhalb des Hohlprofils 2 wirkende Antriebsmittel 38 betätigt. Hierbei handelt es sich um einen Pressstempel 39, der durch eine Durchbrechung 40 in der oberen Außenwand 3 des Hohlprofils 2 auf das erste Schneidwerkzeugteil 36 einwirkt und das Schneidwerkzeug 35 betätigt.

Auch in dieser Darstellung sind die Schneidwerkzeugteile 36, 37 in einer Offenstellung gezeigt. Beim Schneid- bzw. Trennvorgang liegen die Schneidwerkzeugteile 36, 37 an der zu bearbeitenden Innenwand 7 an und stützen die stehenden bleibenden Bereiche bzw. Wandabschnitte mit Stützzonen 41, während der mittlere, innen liegende Wandabschnitt 19 durch die Schneide 42 herausgetrennt wird.

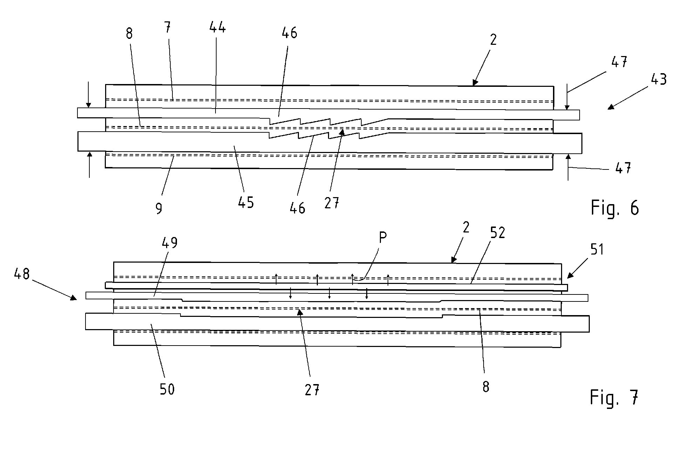

Das in der Figur 6 dargestellte Schneidwerkzeug 43 umfasst ein oberes, erstes Schneidwerkzeugteil 44 und ein unteres, zweites Schneidwerkzeugteil 45. Das erste Schneidwerkzeugteil 44 und das zweite Schneidwerkzeugteil 45 besitzen eine Anzahl von gegengleich zueinander ausgebildeten, keilförmigen Schneiden 46 (Sägezähne). Die Bewegung der Schneidwerkzeugteile 44, 45 aufeinander zu, um den Schneidhub zu vollziehen, kann mechanisch durch außerhalb des Hohlprofils 2 wirkende Antriebsmittel 47 erfolgen.

Es ist auch möglich, dass die Schneiden innerhalb der Schneidwerkzeugteile beweglich gelagert sind und durch geeignete Antriebsmittel separat betätigbar sind.

Bei dem Schneidwerkzeug 48 der Vorrichtung, wie in der Figur 7 zu erkennen, erfolgt die Betätigung der Schneidwerkzeugteile 49, 50 durch zumindest ein Antriebsmittel 51, welches innerhalb des Hohlprofils 2 wirkt. Das Antriebsmittel 51 ist durch einen hydraulisch oder pneumatisch expandierbaren Körper 52, beispielsweise einen Schlauchkörper, gebildet. Die Expansionsfähigkeit des Körpers 52 ist durch die Pfeile P angedeutet. Durch Expansion des Schlauchkörpers 52 wird das erste Schneidwerkzeugteil 49 bewegt und der Trennvorgang bewirkt. Hierbei wird ein innenliegender Wandabschnitt 27 der Innenwand 8 entfernt.

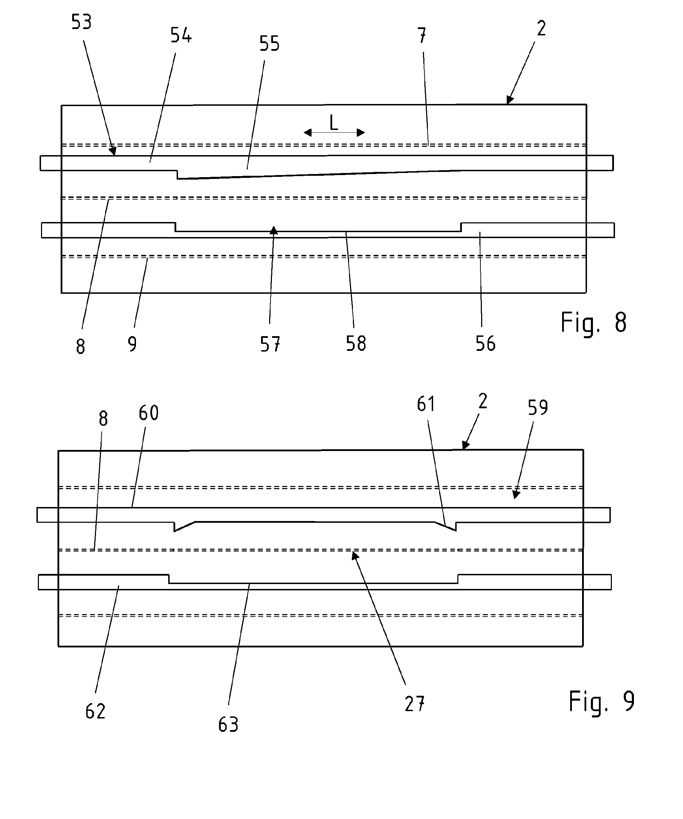

Das Schneidwerkzeug 53 der Vorrichtung, wie in der Figur 8 dargestellt, weist ein oberes, erstes Schneidwerkzeugteil 54 auf mit einer schräg verlaufenden Schneide 55. Das untere, zweite Schneidwerkzeugteil 56 weist eine Matrize 57 mit einer Ausnehmung 58 auf, die konfigurativ auf die Schneide 55 abgestimmt ist. Durch das Zufahren des Schneidwerkzeugs 53 wird ein innenliegender Wandabschnitt 27 der Innenwand 8 herausgetrennt. Die Scherkraft wirkt im Wesentlichen in Längsrichtung L des Schneidwerkzeug 53 bzw. des Hohlprofils 2.

Das Schneidwerkzeug 59 der Vorrichtung gemäß Figur 9 weist am oberen, ersten Schneidwerkzeugteil 60 Schneiden 61 auf, die außen senkrecht und innen um einen Keilwinkel angeschrägt sind, um den inneren Wandabschnitt 27 herauszutrennen. Der untere, zweite Schneidwerkzeugteil 62 weist eine entsprechend konfigurativ auf die Schneide 61 abgestimmte Matrize 63 auf. Die Scherkraft wirkt in Querrichtung zum Schneidwerkzeug 59 bzw. Hohlprofil 2.

Die in der Figur 10 gezeigte Vorrichtung umfasst ein Schneidwerkzeug 64 mit einem oberen, ersten Schneidwerkzeugteil 65 und einen unteren, zweiten Schneidwerkzeugteil 66, die von einer Stirnseite her in das Hohlprofil 2 eingeführt sind. Das erste Schneidwerkzeugteil 65 weist seitliche Schneiden 67 auf mit senkrechten Außenflächen 68 und einer inneren Keilfläche 69. Das Schneidwerkzeug 64 hat eine Breite, die auf die innere Breite b des Hohlprofils 2 abgestimmt ist. Die Schneiden 67 liegen mit ihren senkrechten Außenflächen 68 an den Innenflächen 70 der Außenwände 4, 6 an. Beim Trennvorgang wird der innenliegende Wandabschnitt 20 der Innenwand 9 bündig entlang der Innenflächen 70 der Außenwände 4, 6 herausgetrennt.

Oberhalb des ersten Schneidwerkzeugteils 65 ist ein Antriebsmittel 71 in Form eines expandierenden Dorns 72 technisch vereinfacht angedeutet.

Die Vorrichtung in der Ausführungsform gemäß der Figur 11 weist ein Schneidwerkzeug 73 auf mit einem oberen, ersten Schneidwerkzeugteil 74 und einem unteren, zweiten Schneidwerkzeugteil 75. Das erste Schneidwerkzeugteil 74 weist Schneiden 76 auf, die mit einer Matrize 77 im unteren, zweiten Schneidwerkzeugteil 75 zusammenwirken. Wie zu erkennen, sind die Schneidwerkzeugteile 74, 75 so aufeinander abgestimmt und angeordnet, dass ein innenliegender Wandabschnitt 20 der Innenwand 9 des Hohlprofils 2 durch Betätigung des Schneidwerkzeugs 73 herausgetrennt wird, wobei beim Trennvorgang seitliche Stege 78, 79 der Innenwand 8 stehenbleiben.

Weiterhin zu erkennen ist eine äußere Stützeinheit 80 der Vorrichtung. Die Stützeinheit 80 weist einen Aufnahmeraum 81 auf für das Hohlprofil 2. In der Stützeinheit 80 ist das Hohlprofil 2 beim Schneidvorgang gehalten.

### Bezugszeichen:

1 - Energieabsorptionsprofil
2 - Hohlprofil
3 - Außenwand
4 - Außenwand
5 - Außenwand
6 - Außenwand
7 - Innenwand
8 - Innenwand
9 - Innenwand
10 - Kammer
11 - Kammer
12 - Kammer
13 - Kammer
14 - Längssicken
15 - Quersicken
16 - Halter
17 - Montageelement
18 - Montageöffnung
19 - Wandabschnitt
20 - Wandabschnitt
21 - Ausnehmung
22 - Ausnehmung
23 - Stirnseite
24 - Schneidwerkzeug
25 - oberes Schneidwerkzeugteil
26 - unteres Schneidwerkzeugteil
27 - Wandabschnitt
28 - Ende
29 - Ende
30 - Schneide
31 - Matrize
32 - Stützzone
33 - Stützzone
34 - Antriebsmittel
35 - Schneidwerkzeug
36 - oberes Schneidwerkzeugteil
37 - unteres Schneidwerkzeugteil
38 - Antriebsmittel
39 - Pressstempel
40 - Durchbrechung
41 - Stützzone
42 - Schneide
43 - Schneidwerkzeug
44 - oberes Schneidwerkzeugteil
45 - unteres Schneidwerkzeugteil
46 - Schneide
47 - Antriebsmittel
48 - Schneidwerkzeug
49 - Schneidwerkzeugteil
50 - Schneidwerkzeugteil
51 - Antriebsmittel
52 - Körper
53 - Schneidwerkzeug
54 - oberes Schneidwerkzeugteil
55 - Schneide
56 - untere Schneidwerkzeugteil
57 - Matrize
58 - Ausnehmung
59 - Schneidwerkzeug
60 - oberes Schneidwerkzeugteil
61 - Schneiden
62 - unteres Schneidwerkzeugteil
63 - Matrize
64 - Schneidwerkzeug
65 - oberes Schneidwerkzeugteil
66 - unteres Schneidwerkzeugteil
67 - Schneide
68 - Außenfläche
69 - Keilfläche
70 - Innenfläche
71 - Antriebsmittel
72 - Dorn
73 - Schneidwerkzeug
74 - oberes Schneidwerkzeugteil
75 - unteres Schneidwerkzeugteil
76 - Schneiden
77 - Matrize
78 - Steg
79 - Steg
80 - Stützeinheit
81 - Aufnahmeraum

a - Abstand
b - innere Breite v. 2
L - Längsrichtung
P - Pfeil

## Patentansprüche

1. Verfahren zur Herstellung eines Energieabsorptionsprofils für ein Kraftfahrzeug **gekennzeichnet durch** folgende Schritte:
- Bereitstellen eines stranggepressten Hohlprofils (2), welches Außenwände (3, 4, 5, 6) und zumindest eine zwei Außenwände (3, 4, 5, 6) verbindende Innenwand (7, 8, 9) aufweist;
- Einführen eines Schneidwerkzeugs (24, 35, 43, 48, 53, 59, 64, 73) in das Hohlprofil (2);
- Betätigung des Schneidwerkzeugs (24, 35, 43, 48, 53, 59, 64, 73) und Trennen eines innenliegenden Wandabschnitts (19, 20; 27) aus der Innenwand (7, 8, 9);
- Entfernen des ausgeschnittenen Wandabschnitts (19, 20; 27) und des Schneidwerkzeugs (24, 35, 43, 48, 53, 59, 64, 73) aus dem Hohlprofil (2).

2. Verfahren nach Anspruch 1, **dadurch gekennzeichnet,** dass benachbarte Bereiche des Wandabschnitts (19, 20; 27) beim Trennen abgestützt werden.

3. Verfahren nach Anspruch 1 oder 2, **dadurch gekennzeichnet,** dass das Schneidwerkzeug (24, 35, 43, 48, 53, 59, 64, 73) ein erstes Schneidwerkzeugteil (25, 36, 44, 49, 54, 60, 65, 74) und ein zweites Schneidwerkzeugteil (26, 37, 45, 50, 56, 62, 66, 75) aufweist und das erste Schneidwerkzeugteil (25, 36, 44, 49, 54, 60, 65, 74) von einer Stirnseite (23) des Hohlprofils (2) in eine erste Kammer (10, 11, 12, 13) des Hohlprofils (2) auf einer ersten Seite der Innenwand (7, 8, 9) eingeführt wird und das zweite Schneidwerkzeugteil (26, 37, 45, 50, 56, 62, 66, 75) von einer Stirnseite (23) des Hohlprofils (2) in eine zweite Kammer (10, 11, 12, 13) des Hohlprofils (2) auf der gegenüberliegenden, zweiten Seite der Innenwand (7, 8, 9) eingeführt wird.

4. Verfahren nach einem der Ansprüche 1 bis 3, **dadurch gekennzeichnet,** dass das Schneidwerkzeug (24, 35, 43, 48, 53, 59, 64, 73) durch außerhalb des Hohlprofils (2) wirkende Antriebsmittel (34, 38, 47, 51, 71) betätigt wird.

5. Verfahren nach einem der Ansprüche 1 bis 3, **dadurch gekennzeichnet,** dass das Schneidwerkzeug (24, 35, 43, 48, 53, 59, 64, 73) durch innerhalb des Hohlprofils (2) wirkende Antriebsmittel (34, 38, 47, 51, 71) betätigt wird.

6. Vorrichtung zur Durchführung eines Verfahrens nach einem der Ansprüche 1 bis 5, **gekennzeichnet durch** ein Schneidwerkzeug (24, 35, 43, 48, 53, 59, 64, 73), welches sich durch die Länge (L) des Hohlprofils (2) erstreckt und das Schneidwerkzeug (24, 35, 43, 48, 53, 59, 64, 73) Schneiden (30, 42, 46, 55, 61, 67, 76) aufweist, welche so angeordnet sind, das ein innenliegender Wandabschnitt (19, 20; 27) der Innenwand (7, 8, 9) des Hohlprofils (2) durch Betätigung des Schneidwerkzeugs (24, 35, 43, 48, 53, 59, 64, 73) heraustrennbar ist.

7. Vorrichtung nach Anspruch 6, geeignet zur Herstellung eines Energieabsorptionsprofils, wobei das Energieabsorptionsprofil ein stranggepresstes Hohlprofil (2) mit Außenwänden (3, 4, 5, 6) sowie wenigstens eine zwei Außenwände (3, 4, 5, 6) verbindende Innenwand (7, 8, 9) umfasst und die Innenwand (7, 8, 9) in einem innenliegenden Wandabschnitt (19, 20; 27) zumindest bereichsweise entfernt ist.

8. Vorrichtung nach Anspruch 6 oder 7, **gekennzeichnet durch** Antriebsmittel (34, 38, 47, 51, 71) zur Betätigung des Schneidwerkzeugs (24, 35, 43, 48, 53, 59, 64, 73), welche außerhalb des Hohlprofils (2) und/oder innerhalb des Hohlprofils (2) auf das Schneidwerkzeug (24, 35, 43, 48, 53, 59, 64, 73) oder an dem Schneidwerkzeug (24, 35, 43, 48, 53, 59, 64, 73) wirken.

9. Vorrichtung nach einem der Ansprüche 6 bis 8, **dadurch gekennzeichnet,** dass das Schneidwerkzeug (24, 35, 43, 48, 53, 59, 64, 73) zwei gleichläufig oder gegenläufig in das Hohlprofil (2) einführbare Schneidwerkzeugteile (25, 36, 44, 49, 54, 60, 65, 74; 26, 37, 45, 50, 56, 62, 66, 75) umfasst.

10. Vorrichtung nach einem der Ansprüche 6 bis 9, **gekennzeichnet durch** eine äußere Stützeinheit (80), welche das Hohlprofil (2) aufnimmt.

## Claims

1. Method for producing an energy-absorbing profile for a motor vehicle,**characterised by** the steps of:
- providing an extruded hollow profile (2) having outer walls (3, 4, 5, 6) and at least one inner wall (7, 8, 9) which connects two outer walls (3, 4, 5, 6);
- inserting a cutting tool (24, 35, 43, 48, 53, 59, 64, 73) into the hollow profile (2);
- actuating the cutting tool (24, 35, 43, 48, 53, 59, 64, 73) and cutting an internal wall portion(19, 20; 27) out of the inner wall (7, 8, 9);
- removing the cut out wall portion (19, 20; 27) and the cutting tool (24, 35, 43, 48, 53, 59, 64, 73) from the hollow profile (2).

2. Method according to claim 1, **characterised in that** adjacent regions of the wall portion (19, 20; 27) are supported during the cutting.

3. Method according to either claim 1 or claim 2, **characterised in that** the cutting tool (24, 35, 43, 48, 53, 59, 64, 73) has a first cutting tool part (25, 36, 44, 49, 54, 60, 65, 74) and a second cutting tool part (26, 37, 45, 50, 56, 62, 66, 75), and the first cutting tool part (25, 36, 44, 49, 54, 60, 65, 74) is inserted from an end side (23) of the hollow profile (2) into a first chamber (10, 11, 12, 13) of the hollow profile (2) on a first side of the inner wall (7, 8, 9) and the second cutting tool part (26, 37, 45, 50, 56, 62, 66, 75) is inserted from an end side (23) of the hollow profile (2) into a second chamber (10, 11, 12, 13) of the hollow profile (2) on the opposite second side of the inner wall (7, 8, 9).

4. Method according to any of claims 1 to 3, **characterised in that** the cutting tool (24, 35, 43, 48, 53, 59, 64, 73) is actuated by drive means (34, 38, 47, 51, 71) which act outside the hollow profile (2).

5. Method according to any of claims 1 to 3, **characterised in that** the cutting tool (24, 35, 43, 48, 53, 59, 64, 73) is actuated by drive means (34, 38, 47, 51, 71) which act within the hollow profile (2).

6. Device for carrying out a method according to any of claims 1 to 5, **characterised by** a cutting tool (24, 35, 43, 48, 53, 59, 64, 73) which extends through the length (L) of the hollow profile (2), and the cutting tool (24, 35, 43, 48, 53, 59, 64, 73) has blades (30, 42, 46, 55, 61, 67, 76) which are arranged so as to allow an internal wall portion (19, 20; 27) of the inner wall (7, 8, 9) of the hollow profile (2) to be cut out by means of actuating the cutting tool (24, 35, 43, 48, 53, 59, 64, 73).

7. Device according to claim 6, suitable for producing an energy-absorbing profile, wherein the energy-absorbing profile comprises an extruded hollow profile (2) having outer walls (3, 4, 5, 6) and at least one inner wall (7, 8, 9) which connects two outer walls (3, 4, 5, 6),and the inner wall (7, 8, 9) is removed in an internal wall portion (19, 20; 27) at least in regions.

8. Device according to either claim 6 or claim 7, **characterised by** drive means (34, 38, 47, 51, 71) for actuating the cutting tool (24, 35, 43, 48, 53, 59, 64, 73), which drive means act outside the hollow profile (2) and/or within the hollow profile (2) on the cutting tool (24, 35, 43, 48, 53, 59, 64, 73) or on the cutting tool (24, 35, 43, 48, 53, 59, 64, 73).

9. Device according to any of claims 6 to 8, **characterised in that** the cutting tool (24, 35, 43, 48, 53, 59, 64, 73) comprises two cutting tool parts (25, 36, 44, 49, 54, 60, 65, 74; 26, 37, 45, 50, 56, 62, 66, 75) which can be introduced into the hollow profile (2) in the same direction or in opposite directions.

10. Device according to any of claims6 to 9, **characterised by** an outer support unit (80) which receives the hollow profile (2).

## Revendications

1. Procédé de fabrication d'un profilé d'absorption d'énergie pour un véhicule automobile, **caractérisé par** les étapes suivantes :
- préparer un profilé creux extrudé (2) qui comporte des parois extérieures (3, 4, 5, 6) et au moins une paroi intérieure (7, 8, 9) reliant deux parois extérieures (3, 4, 5, 6) ;
- introduire un outil de coupe (24, 35, 43, 48, 53, 59, 64, 73) dans le profilé creux (2) ;
- actionner l'outil de coupe (24, 35, 43, 48, 53, 59, 64, 73) et séparer de la paroi intérieure (7, 8, 9) un tronçon de paroi situé à l'intérieur (19, 20 ; 27) ;
- retirer le tronçon de paroi coupé (19, 20 ; 27) et l'outil de coupe (24, 35, 43, 48, 53, 59, 64, 73) hors du profilé creux (2).

2. Procédé selon la revendication 1, **caractérisé en ce que** des zones voisines du tronçon de paroi (19, 20 ; 27) sont soutenues pendant la séparation.

3. Procédé selon la revendication 1 ou 2, **caractérisé en ce que** l'outil de coupe (24, 35, 43, 48, 53, 59, 64, 73) comporte une première partie d'outil de coupe (25, 36, 44, 49, 54, 60, 65, 74) et une deuxième partie d'outil de coupe (26, 37, 45, 50, 56, 62, 66, 75), **en ce que** la première partie d'outil de coupe (25, 36, 44, 49, 54, 60, 65, 74) est introduite par un côté frontal (23) du profilé creux (2) dans une première chambre (10, 11, 12, 13) du profilé creux (2) au niveau d'un premier côté de la paroi intérieure (7, 8, 9) et **en ce que** la deuxième partie d'outil de coupe (26, 37, 45, 50, 56, 62, 66, 75) est introduite par un côté frontal (23) du profilé creux (2) dans une deuxième chambre (10, 11, 12, 13) du profilé creux (2) au niveau du deuxième côté, situé à l'opposé, de la paroi intérieure (7, 8, 9).

4. Procédé selon l'une des revendications 1 à 3, **caractérisé en ce que** l'outil de coupe (24, 35, 43, 48, 53, 59, 64, 73) est actionné par des moyens d'entraînement (34, 38, 47, 51, 71) agissant à l'extérieur du profilé creux (2).

5. Procédé selon l'une des revendications 1 à 3, **caractérisé en ce que** l'outil de coupe (24, 35, 43, 48, 53, 59, 64, 73) est actionné par des moyens d'entraînement (34, 38, 47, 51, 71) agissant à l'intérieur du profilé creux (2).

6. Dispositif pour la mise en oeuvre d'un procédé selon l'une des revendications 1 à 5, **caractérisé par** un outil de coupe (24, 35, 43, 48, 53, 59, 64, 73) qui s'étend sur la longueur (L) du profilé creux (2), lequel outil de coupe (24, 35, 43, 48, 53, 59, 64, 73) comporte des lames (30, 42, 46, 55, 61, 67, 76) qui sont disposées de telle sorte qu'un tronçon de paroi situé à l'intérieur (19, 20 ; 27) de la paroi intérieure (7, 8, 9) du profilé creux (2) peut être séparé et sorti en actionnant l'outil de coupe (24, 35, 43, 48, 53, 59, 64, 73).

7. Dispositif selon la revendication 6, convenant à la fabrication d'un profilé d'absorption d'énergie, le profilé d'absorption d'énergie comprenant un profilé creux extrudé (2) avec des parois extérieures (3, 4, 5, 6) et au moins une paroi intérieure (7, 8, 9) reliant deux parois extérieures (3, 4, 5, 6) et au moins une partie de la paroi intérieure (7, 8, 9) étant enlevée sur un tronçon de paroi situé à l'intérieur (19, 20 ; 27).

8. Dispositif selon la revendication 6 ou 7, **caractérisé par** des moyens d'entraînement (34, 38, 47, 51, 71) qui sont destinés à l'actionnement de l'outil de coupe (24, 35, 43, 48, 53, 59, 64, 73) et qui agissent à l'extérieur du profilé creux (2) et/ou à l'intérieur du profilé creux (2) sur l'outil de coupe (24, 35, 43, 48, 53, 59, 64, 73) ou contre l'outil de coupe (24, 35, 43, 48, 53, 59, 64, 73).

9. Dispositif selon l'une des revendications 6 à 8, **caractérisé en ce que** l'outil de coupe (24, 35, 43, 48, 53, 59, 64, 73) comprend deux parties d'outil de coupe (25, 36, 44, 49, 54, 60, 65, 74 ; 26, 37, 45, 50, 56, 62, 66, 75) pouvant être introduites dans le même sens ou en sens contraire dans le profilé creux (2).

10. Dispositif selon l'une des revendications 6 à 9, **caractérisé par** une unité de soutien extérieure (80) qui reçoit le profilé creux (2).
